# EUROPEAN PATENT APPLICATION

(11) **EP 4 752 761 A1**
(43) Date of publication of application: **03.06.2026**
(21) Application number: 24306988.7
(22) Date of filing: 27.11.2024
(51) Int. Cl.: G06F 21/14, G06F 21/54, G06N 20/00

(54) **AI MODEL ANTI-PIRACY MECHANISM**

(71) Applicant: THALES DIS FRANCE SAS, 92190 Meudon (FR); THALES, 92190 Meudon (FR)
(72) Inventor: GARREAU, Eric, 83210 La Farlède (FR); DUGAND, Juan-David, 13090 Aix en Provence (FR); BELFY, Henri, 31100 Toulouse (FR)
(74) Representative: Quintero Romero, Manuel

(57) **Abstract**

Protecting an artificial intelligence model installed in an artificial intelligence system developed using the artificial intelligence program development system from being pirated by receiving by the artificial intelligence development system an unprotected artificial intelligence model, transforming the unprotected artificial intelligence model into a protected artificial intelligence model using a transformation function (f) after the training phase of the artificial intelligence model, and operating a protecting Al runtime accessible via an application programming interface to access the protected artificial intelligence model by executing an inverse transformation function (f⁻¹) incorporated into access routines of the protecting Al runtime.

## Description

### BACKGROUND OF THE INVENTION

The present invention relates generally to neural networks, and in particular to securing devices and software systems against having trained neural networks pirated.

Neural networks, in particular deep neural networks (DNN), are increasingly used to provide artificial intelligence solutions in a diverse range of applications, including computer vision, object identification, natural language processing, speech recognition, medical diagnosis, and game play.

*Classification* is a basic task in machine learning and statistics. It involves assigning input data into pre-defined categories or classes based on their features. In classification, the AI model examines the features of input data and categorizes them into one of several predetermined categories or classes. The output of a classification model is a predicted class label for each input data point.

For example, a classification task may be to classify images of vehicles into according to different categories of vehicles, such as cars, trucks, motorcycles, tractors, airplanes, etc. When the AI model is presented an image, it assigns probabilities indicating the likelihood that the image represents each of the available categories or none of the categories. Thus, if an image is an image of a passenger car, the AI model would, if trained well, return a high probability that the image is a car and low probabilities for the other vehicle categories.

To achieve this capability, the AI model must be trained. Training of AI models can be very time consuming and expensive. Often massive amounts of data must be acquired so that it can be used to train the AI model. The training data includes images that are representative of the various categories against which the AI model is to be applied. Internal parameters, sometimes referred to as *weights* and *biases,* of the AI model are iteratively adjusted so that these training images are accurately classified, i.e., the output probabilities reflect what is depicted in the image. This is achieved by feeding input data into the network and comparing the output with known output labels. Based on this comparison, the network's parameters are iteratively adjusted until it can accurately predict or classify the data. This process allows the network to gradually learn complex patterns in the data. As a result, the neural network becomes better at making accurate predictions or classifications over time.

Thus, to achieve good results from an AI model, the training often requires large efforts at acquiring training data. Furthermore, once the training data has been collected, the task of applying it to train an AI model requires a large amounts of time and computer resources. Therefore, the AI model itself is a valuable asset of the entity that develops an AI model, e.g., a deep neural network, data acquisition and training.

These AI models are often trained by one party and incorporated into artificial intelligence systems by another party under some form of license agreement, e.g., as part of a software license. In such a case the training party has an interest in owning the intellectual property associated with the trained AI model and may be very restrictive in what the other party may do with the AI model. Licensing agreements may limit the use of the AI model to a specific purpose and restrict further distribution of the AI model.

However, in many cases one AI model, i.e., a trained deep neural network, may be useful in many applications. One could, for example, envision the use of a voice recognition system that uses an AI model to classify user speech to determine digits of a spoken account number. Such an AI model may be trained to classify spoken utterances into digits and would be useful in any artificial intelligence system that requires interpreting spoken digits. Thus, if a developer has access to an AI model for interpreting digits from on artificial intelligence system, e.g., a banking system requiring verbal entry of an account number, may pirate that AI model into a system that has an entirely different use for interpretation of verbally entered digits, e.g., a telephone number recognition system.

It is possible for attackers to create new AI models from AI models that they have access to thereby indirectly pirating the latter. In such an attack, referred to as *Distillation Attack,* a nefarious user has access, for example through a license agreement, to a first AI model, which would be provided to it for a specified use. The attacker provides a training input data set to that AI model and thus obtains a corresponding output dataset. The attacker then provides the input data set and generated output to an AI model training tool to produce a second AI model. This mechanism of generating a new AI model would normally constitute an unsanctioned use of the first AI model and is thus a form of pirating the first AI model.

As AI models are expensive to develop and have potential multiple applications, it is not surprising that there is a risk that an entity that has access to an AI model for one purpose adapts it for another purpose in violation of the intellectual property rights in the AI model. While license agreements and intellectual property laws may attempt to curtail such unsanctioned use of AI models, legal remedies may not be sufficient to prevent a nefarious party from pirating an AI model that it has access to.

From the foregoing it is apparent that there is a need for an improved countermeasure technique to protect against pirating of AI models, including neural networks.

### SUMMARY OF THE INVENTION

The present invention provides a solution for the aforementioned problems by a method for operating an artificial intelligence program development system according to claim 1, an artificial intelligence development system according to claim 18, and an artificial intelligence system according to claim 19. In dependent claims, preferred embodiments of the invention are defined.

In a first inventive aspect, the invention provides an artificial intelligence model installed in an artificial intelligence system developed using the artificial intelligence program development system from being pirated by receiving by the artificial intelligence development system an unprotected artificial intelligence model, transforming the unprotected artificial intelligence model into a protected artificial intelligence model using a transformation function (f) after the training phase of the artificial intelligence model, and operating a protecting AI runtime accessible via an application programming interface to access the protected artificial intelligence model by executing an inverse transformation function (f⁻¹) incorporated into access routines of the protecting AI runtime.

In an embodiment, the transformation function alters the descriptor table of the artificial intelligence model into an altered descriptor table. This transformation is then reversed by the inverse function translating the altered descriptor table back into an unaltered descriptor table.

In another embodiment, the transformation function inserts incorrect values at defined locations in the artificial intelligence model. This transformation is then reversed by the inverse function replacing the inserted incorrect values in the protected artificial intelligence model with corresponding correct values.

In yet another embodiment the transformation function alters the artificial intelligence model by applying a controlled alteration to the value of a first plurality of data words of the artificial intelligence model. Conversely, the inverse transformation function may be applied to the first plurality of data words of the protected artificial intelligence model.

In another embodiment, the transformation function alters the artificial intelligence model by applying a reversable controlled permutation of a first plurality of data words of the artificial intelligence model. Conversely, the inverse transformation function may be applied to the first plurality of data words of the protected artificial intelligence model to cancel the controlled permutation of the first plurality of data words by applying the reverse of the controlled permutation.

In an embodiment, the transformation function alters the artificial intelligence model by creating bigger arrays containing random data around the original array contents, inserted at some relative location in the bigger arrays. This transformation is then reversed by the inverse function copying the original arrays contents from their relative location inside the bigger arrays of the protected artificial intelligence model and ignores the bigger arrays.

In an embodiment, the transformation function alters the operations graph of the artificial intelligence model by adding an extra operation. This transformation is then reversed by the inverse function removing the extra operation when the operations graph of the protected artificial intelligence model is processed.

In an embodiment, the artificial intelligence model is implemented as interpretable logic including a set of opcodes and corresponding arguments, wherein the transformation function obfuscates the opcodes and corresponding arguments of the interpretable logic implementation of the artificial intelligence model by replacing the original opcodes and corresponding arguments with replacement opcodes and replacement arguments. The AI model is then protected by interpreting the obfuscated opcodes and obfuscated arguments by executing the original opcodes and corresponding arguments when the replacement opcodes and replacement arguments are encountered during the interpretation of the protected AI model.

In an embodiment, the artificial intelligence model is implemented as interpretable logic including a set of opcodes and corresponding arguments, wherein the transformation function obfuscates the arguments of the interpretable logic implementation of the artificial intelligence model by swapping a plurality of opcode's argument order from an original ordering, and replacing the original opcodes's arguments with the swapped ordering. The AI model is then protected by during processing of the protected AI model, when encountering an opcode with a swapped argument ordering, reversing the swapping of argument back to the original order and executing the encountered opcode with the original argument order.

In an embodiment, the AI model is protected by providing for non-standard functions represented by non-standard opcodes, and allowing to insert or replace some original opcodes or combinations of original opcodes by the non-standard opcodes in the protected AI model, wherein the artificial intelligence model is implemented as interpretable logic including a set of opcodes and corresponding arguments, wherein the transformation function creates the protected AI model by inserting or replacing a plurality of original opcodes or combinations of original opcodes with the non-standard opcodes. In this aspect, the AI model is further protected by modifying an interpreter for said interpretable logic to interpret said nonstandard opcodes, embedding the modified interpreter in the protected AI runtime, wherein the modified interpreter, in response to encountering said non-standard opcodes when interpreting an AI model, executing functionality to produce results equivalent to said original opcodes.

In an embodiment, an artificial intelligence development system executing according to any of the hereinabove described technology. In an aspect, an artificial intelligence system is programmed to include any hereinabove described AI model transformation techniques.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- FIG. 1: is a block diagram illustrating major phases of a life cycle of a neural network.
- FIG. 2: is a simplified schematic of a deep neural network (DNN) as an example of an AI model.
- FIG. 3: is a graphical illustration of an example of the relationship between logits of the output layer and a corresponding probabilities vector produced by an activation function, e.g., the Softmax function.
- FIG. 4: is line drawing of an example in which an artificial intelligence system that uses an AI model to classify data objects, specifically a self-driving car that uses an AI model to analyze images obtained from image sensors.
- FIG. 5: is a high-level architecture diagram illustrating a possible architecture for a neural-network based artificial intelligence system deployed, for example, in an automated device of FIG. 4.
- FIG. 6: is a flow-chart illustrating the transformation of an unprotected AI model into a protected AI model.
- FIG. 7: is a flow-chart illustrating the application of an inverse function to a protected AI model to allow normal usage of the AI model.
- FIG. 8: is a high-level architecture diagram illustrating a possible memory layout for a neural-network based artificial intelligence system incorporating a protected AI model.
- FIG. 9: provides a descriptor table of an unprotected model and an altered descriptor-table created by a descriptor-table alteration subfunction of the protection function "f" of FIG. 6 into a protecting descriptor-table.
- FIG. 10: is a block diagram of an AI application according to an embodiment in which an AI operations interpreter is modified to allow for modification to executable code of an AI model.
- FIG. 11: is a data flow diagram illustrating the transformation of an unprotected AI model into a protected AI model and corresponding transformation of an unprotected AI model operations into a protected AI model interpreter by an interpreter protection function "fᵢ".

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The technology described herein addresses a problem that arises in the realm of security for a variety of artificial intelligence models (Al models). An AI model is a mathematical algorithm or computer program designed to perform complex tasks based on supervised or non-supervised learning . To implement an AI model, numerous operators are combined and paired to an important volume of data. Learning is the process of fine-tuning the data and operators to get the best trained AI model to solve the problem.

Examples of AI models include deep neural networks, convolutional neural networks, recurrent neural networks, long-short memory neural networks, large language models, YOLO (you only look once) neural networks. While the techniques described herein apply to all these artificial intelligence models, as well as other AI models, deep neural networks (DNN) are described here as an example of AI models. Deep neural networks, described in greater detail below, are artificial neural networks made up of multiple layers of neurons between an input layer and an output layer (and include other techniques such as convolution, rectified linear units (ReLU) activation functions, pooling layers). These networks may be trained to analyze input data and cause actions to be taken in response to such analysis.

*Classification* is one example of many different tasks that an AI model may be applied to. In short, classification consists in accepting an input data and classifying the data as having different probabilities associated with many different classes within a domain. For example, in a speech recognition system, a human user may be asked to speak a credit card number made up of the digits 0 through 9. Thus, every utterance made by the user could be one of the ten digits or something intelligible or outside of the domain. When a user says a digit, the DNN classifies the user's utterance by giving each of the 10 digits a probability as being the digit corresponding to the user's utterance. If there is a good match, the probability for one digit is much higher than all other digits.

Other examples of uses of AI models include regression, time series prediction, box detection (including classification of contents of detected boxes), autoencoding, image denoising, image generation, image segmentation, reinforcement learning, and natural language processing.

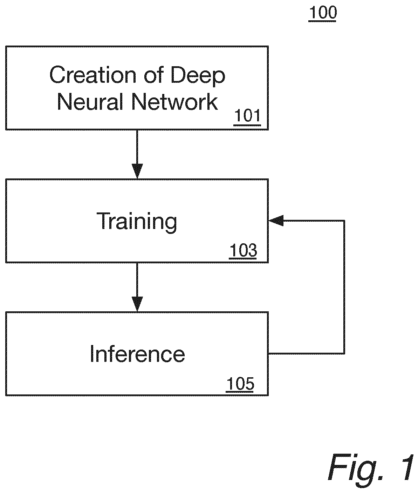

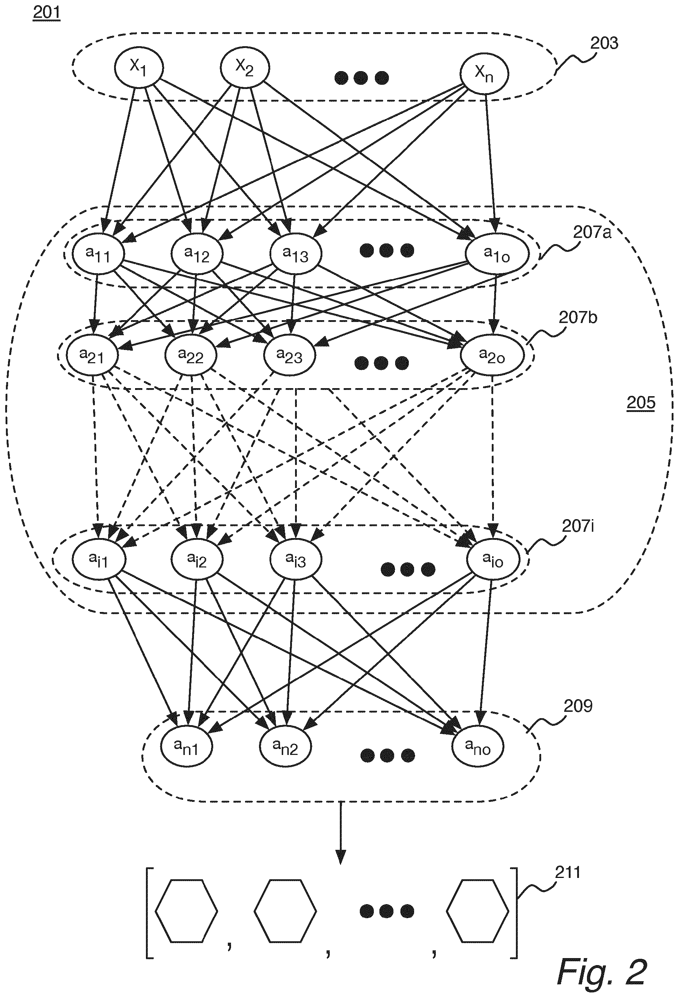

Fig. 1 is a flow-chart illustrating the major steps of a life cycle 100 of an AI model, e.g., a deep neural network (DNN), and Fig. 2 is a simplified schematic of a DNN 201. In a first phase 101, a DNN 201 is created, i.e., a structure of input neurons, hidden layers of neurons, and output neurons is established. As seen in the example of DNN 201, a DNN consists of an input layer 203, a plurality of hidden layers 205, and an output layer 209, which is the *nth* layer of the DNN 201. The neurons of a layer *m*, e.g., layer 207a, are all linked to neurons in layer *m*+1, e.g., layer 207b, with the final hidden layer 207i linked to neurons of the output layer 209. The links are depicted by arrows between nodes representing neurons.

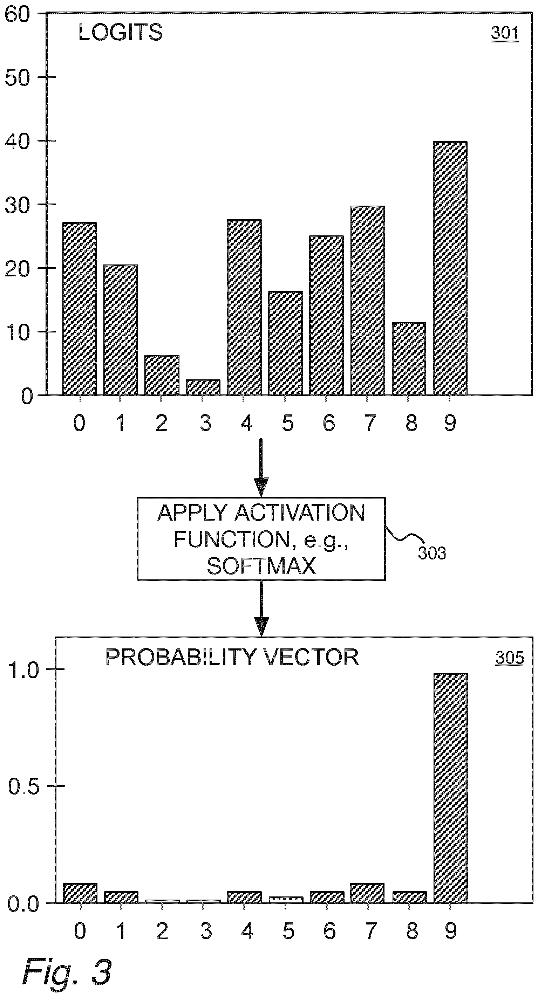

The values associated with the neurons in the output layer are typically raw scores referred to as *logits.* However, as typically the desired classification is in the form of a probabilities vector, e.g., for each of ten digits, the probability that the spoken utterance is corresponds to that particular digit. Therefore, an *activation* function is applied to the logits vector of the output layer to produce a probability distribution vector 211. The activation function may be any suitable activation function, e.g., the Softmax function or Sigmoid function, respectively. Fig. 3 is a graphical illustration of an example of the relationship between logits of the output layer 209 and a corresponding probabilities vector 211 produced by an output function, e.g., the Softmax function. In this example having ten classes having class labels 0 through 9, e.g., the digits 0 through 9 (but could be any ten classes), the logits have raw value scores in the range 0 through 60 (the scores may go higher but the graph is limited to 60) with a highest score for class 9 at a raw score of about 40, which is illustrated in graph 301. Application of the activation function 303 produces a probability vector illustrated in graph 305 (slightly altered for illustration purposes; in reality the probabilities for classes 0 through 8, i.e., the classes with lower scores, after application of the Softmax function, would be so small that they would blur in with the 0.0 line). Thus, in this case, the sampling prediction for the input image would be class 9.

A DNN is also defined by a number of parameters including *weights* and *biases.* Weights are associated with the links between neurons and biases are associated with the neurons. The output value of a neuron is a function of the weights on links from neurons in a preceding layer and the bias associated with the neuron.

Prior to training, the parameters, i.e., weights and biases, may be provided some initial default values. However, at that stage, the DNN is not capable of accurate classification. That requires the second phase 103, *training.*

During the training phase 103, a DNN is fed a large dataset of objects with known classification. The objects are input into the DNN and the DNN produces classifications for each of the objects. For example, if the classification operation is to classify images to indicate which type of vehicle is being depicted, e.g., tractor, airplane, car, bus, the input dataset would contain images of such vehicles. The output classifications are then validated for accuracy and the neural net parameters are then iteratively adjusted, the classifications reperformed, and classification results reevaluated, until the classifications indicate classification probabilities that have converged and no longer improving on successive parameter adjustments, or a maximum number of iterations have been carried out. Finally, the trained DNN may be evaluated against an independent dataset that was not used in the training to confirm accuracy of the classifications.

Finally, the DNN is deployed in an *inference* phase 105 in which the DNN is put to practical use to classify hitherto unseen data to make predictions that may be used in an automation system. For example, a trained DNN is used to interpret spoken digits may be deployed into an automated attendant system for providing information to credit card customers.

Accuracy of classifications produced during the inference phase 105 may be fed back into the training phase 103 to further refine the accuracy of the DNN using real-world data.

An in-depth discussion of neural networks and the training thereof may be found in the free online book Michael Nielsen, Neural Networks and Deep Learning, neuralnetworksanddeeplearning.com (accessed on, November 30, 2020) (also in *pdf* format at http://static.latexstudio.net/article/2018/0912/neuralnetworksanddeeplearning.pdf, *accessed on,* March 4, 2024), incorporated herein by reference.

While Figs. 1-3 illustrate training of a DNN by adjusting weights and biases based on a training data set, similar approaches apply to training other Al models.

Thus, because training an Al model may require a great deal of expense and effort, an Al model may represent a significant investment for the owner of the Al model. However, deployment of an Al model obtained for solving one problem in a solution for another problem may require a comparatively minimal effort. Thus, there are great incentives for developers to impermissibly apply an Al model to problems outside of licensed uses. Conversely, the owner of an Al model benefits from avoiding such pirate use. The techniques described herein serves to avoid unsanctioned use of AI models.

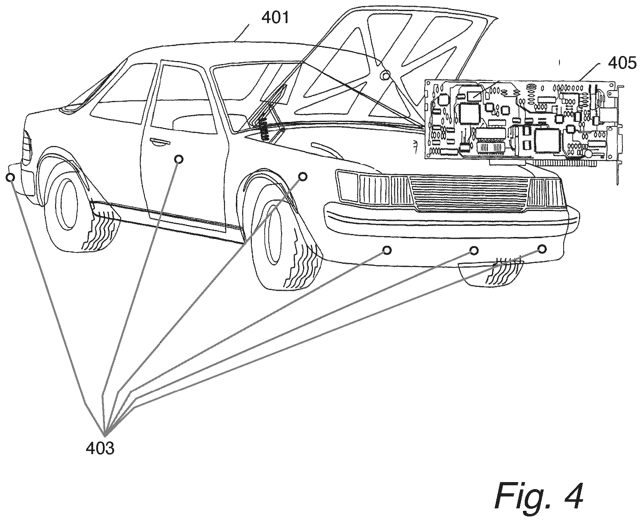

Fig. 4 provides an example use of artificial intelligence technology, namely, image processing for automotive applications such as self-driving cars or even rudimentary driver assist functions. A wholly or partially self-driving car 401 is equipped with a number of image sensors 403, these may be a combination of digital cameras, proximity sensors, and radar units. Digital samples obtained from these sensors 403 are input to an artificial intelligence system 405 for processing. The processing may include detection of other vehicles and pedestrians in the vicinity of the car 401, and interpretation of road signs. Thus, an Al model may be employed by the artificial intelligence system 405 for interpreting images acquired through the image sensors 403.

While the AI model may have been provided for the purpose of analyzing digital images acquired by self-driving cars, the same AI model may be applicable for other applications, e.g., determining activity in a traffic center. Furthermore, a software developer of self-driving car control software may have a license to use the AI model for a specific self-driving car solution without the right to apply it to other applications.

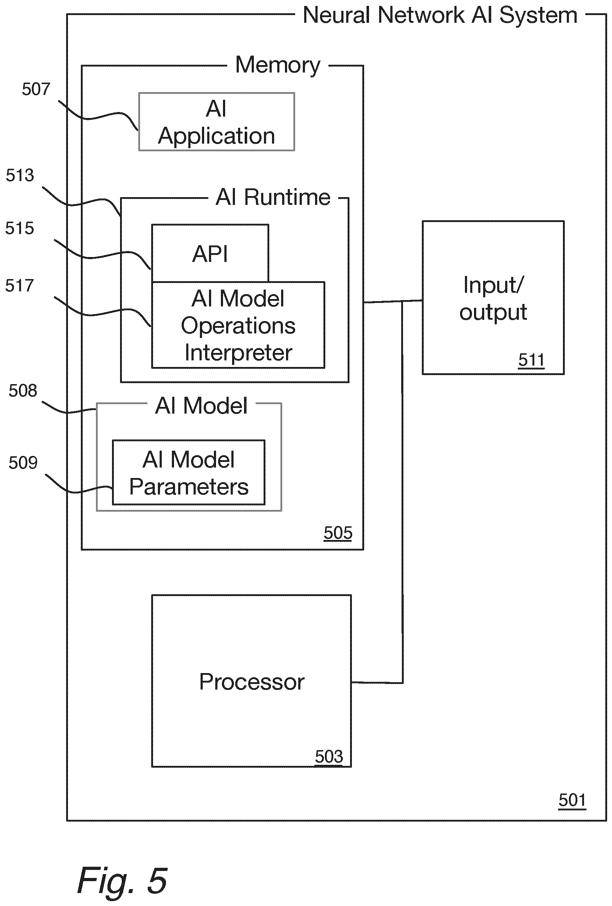

FIG. 5 is a high-level architecture diagram illustrating a possible architecture for an artificial intelligence system 501, e.g., the artificial intelligence systems 405 of FIG. 4, that includes an AI model 508, e.g., an AI model selected from deep neural networks, convolutional neural networks, recurrent neural networks, long-short memory neural networks, large language models, YOLO (you only look once) neural networks. The artificial intelligence system 501, which may be a deep learning neural network system, includes a processor 503, which may be a microprocessor, a graphics processing unit, or any processing unit suitable for executing a neural network application.

The processor 503 is connected, for example, via a bus, to a memory 505. The memory 505 may be a non-volatile memory (NVM) such as a flash memory or an erasable programable read only memory (EPROM). The memory 505 contains a neural network processing application 507, e.g., a self-driving car control software, an AI model 508 which has some adjustable AI model parameters 509, e.g., neural network parameters such as weights and biases. As noted above, the parameters 509 contains, at least, weights associated with the neurons that make up a neural network. These weights are adjusted during training of the neural network.

The artificial intelligence system 501 further includes an input/output interface 511 for receiving input, for example, from the sensors 403 of FIG. 4. Updated parameters 509 may also be uploaded to the artificial intelligence system 501 via the input/output interface 511.

One mechanism in which the AI application 507 interacts with the AI Model 508 is by making calls to procedures in an AI runtime 513. An AI runtime 513 is software that provides essential tools, functions, and resources for executing AI models. The AI runtime 513 provide an API 515 and interfaces that allow AI applications, to interact with AI models 508, manage inputs and outputs, and configure various runtime parameters. For example, an AI application 507 may receive an image or other sensor data from the input/output interface 511 and provide that image or sensor data to an AI model via the AI runtime 513 for classification and receive in return classification with associated probabilities.

An AI model 508 may contain data structures that include executable operations. In one mechanism, these operations are interpreted by an AI model operations interpreter 517.

The Open Neural Network Exchange (ONNX) is an open-source artificial intelligence ecosystem that defines standards and software tools for machine learning algorithms. Open Neural Network Exchange, https://onnx.ai (accessed, 1 September 2024). One component of ONNX is the ONNX runtime which is a runtime that supports inferencing in many different kinds of AI models, e.g., deep neural networks, convolutional neural networks, recurrent neural networks, long-short memory neural networks, large language models, YOLO (you only look once) neural networks. Thus, the AI runtime 513 may, for example, be the ONNX runtime.

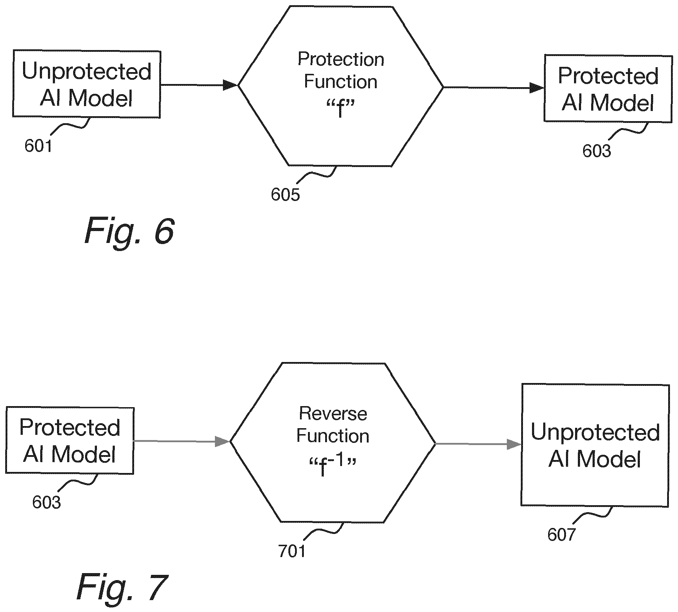

FIG. 6 and 7 are data flow diagrams illustrating the transformation of an unprotected AI model 601 into a protected AI model 603 and the use of the protected AI model.

The unprotected AI model 601, e.g., a deep neural network, is an AI model that may have been developed through the training procedure described hereinabove. Interaction with the unprotected AI model 601 would be through a standard AI runtime 513.

As illustrated in FIG. 6, the unprotected AI model 601 is transformed by a protection function "f" 605 into the protected AI model 603. Examples of transformations are discussed hereinbelow. The transformations are such that any interaction with the protected AI model 603 through a standard AI runtime 513, i.e., a runtime library designed for unprotected AI models, would produce incorrect results. To use the protected AI model 603 requires a unique AI runtime that is designed to interface specifically to the specific protected AI model 603.

The protection function 605 may be incorporated into a software development environment. Thus, in such an embodiment, when a developer develops an AI application that accesses an AI model, the software development environment applies the protection function 605 and outputs the resulting protected AI model 603.

The protection function ("f") 605 is applied - after the training phase, but not during the training phase - directly on the unprotected AI model 601 to produce the protected AI model 603. The protected AI model 603 is deployed and used in the field, where it is used in the inference phase (see, Fig. 1, inference phase 105). During the inference phase 105, the protected AI model 603 is executed using an AI runtime, which also implements a reverse function ("f⁻¹") 701 (discussed herein below). The result of this computation using the reverse function ("f⁻¹") 701 is equivalent to the non-protected AI model executed with the unmodified AI runtime.

FIG. 7 illustrates the converse of FIG. 6, namely, to allow an AI application 507 to make normal use 607 of the protected AI model 603, a reverse function "*f*⁻¹" 701 is applied. The reverse function "*f*⁻¹" 607 reverses the protection schemes applied by the protection function "*f*" 605. Typically, the reverse function "*f*⁻¹" 701 is implemented in a protecting AI runtime, i.e., an AI runtime that is modified to apply the reverse function.

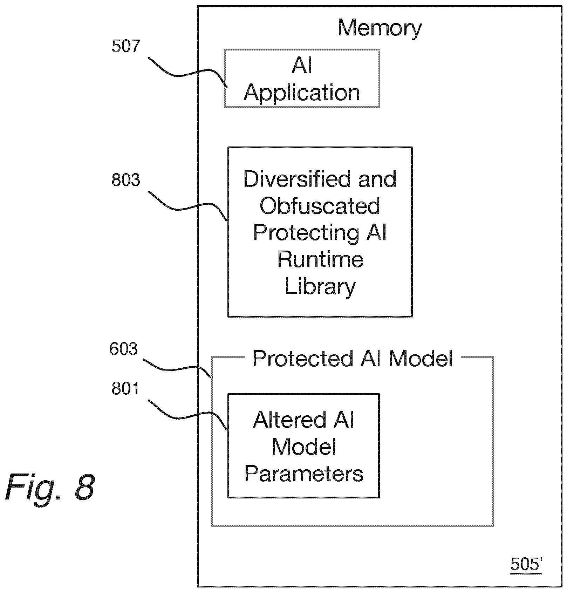

FIG. 8 is a schematic of a high-level view of a memory 505' that is analogous to the memory 505 illustrated in FIG. 5. In the case of the memory 505' it contains modules to allow the use of a protected AI model 603. In at least one embodiment, the protection mechanism alters AI model parameters 509. Thus, the protected AI model contains altered AI model parameters 801. As noted above, to access the protected AI model 603 an AI application 507 makes API calls to a protecting AI runtime 803. To protect the protecting AI runtime 803 from attack, in at least one embodiment the protecting AI runtime 803 is diversified and obfuscated.

Thus, the protected AI model 603 and protecting AI runtime 803 are linked by the transformations that transform the AI model 508 into the protected AI model 603. To facilitate the correspondence between the protected AI model 603 and protecting AI model runtime library 803, the AI runtime 513 is transformed to realize the inverse transformations (*f*⁻¹) corresponding to the protection function (*f*) 605. In an embodiment, that transformation is performed within a software development environment.

The protecting AI runtime 803 is, for example, based on the widely-used ONNX library engine. To generate the protecting library 803 based on the ONNX library engine, in embodiment methods are added to apply the inverse function to the obfuscation that was performed offline to a protected AI model 603 that follows the ONNX AI model standard, i.e., which has been obfuscated with an obfuscation tool as described in conjunction with the description of Fig. 6. The protected library based on the ONNX library engine contains patches to the ONNX library, which operates nominally on the protected AI model 603, i.e., as it would operate when processing an unprotected AI model 601 using the unprotected AI runtime. The patched library is also obfuscated to hide the techniques and parameters used. The obfuscation does not alter the functionality of the AI runtime library, but the obfuscation protects the AI runtime library against reverse engineering of the "f⁻¹" function.

There are three different roles in the creation and use of the protected AI model 603 and protecting AI runtime 803:
- The vendor who is responsible for creating the protecting AI runtime 803 and the protecting tool that applies the protection function 605. The protecting runtime library 803 and the protecting tool may be incorporated into a software development system.
- The AI model developer who uses these tools, for example, incorporated into a software development system, after training an unprotected AI model 601 to create the protected AI model 603.
- The AI application developer who uses the protected trained AI model 603 in an AI system.

The AI application developer is provided the protected AI model 603 and the protecting AI runtime 803. The developer creates an AI application that bundles the protected AI model 603 and protecting AI runtime 803. AI runtime calls are therefore made against the protecting AI runtime 803, which applies the reverse function ("f⁻¹") 701 while processing standard AI runtime API calls made by the AI application.

To further protect the protecting AI runtime 803, it is obfuscated, and can be diversified so that the same protection can be made available in different obfuscated shapes (e.g., different customers obtain different shapes of the same protection). Software obfuscation encompasses a number of techniques that create different but functionally equivalent versions of a software system, application, or library. Thus, through software obfuscation and diversification, different deployments of the protecting AI runtime, while functionally the same, have structural variations that thwarts reverse engineering efforts attempting to discover how the runtime library has been altered to be able to deal with the protected AI model.

Software obfuscation is a technique used to deliberately make a software program's code more difficult to understand, analyze, or reverse-engineer, while preserving its original functionality. Obfuscation makes it more challenging for attackers to decompile or analyze the software, thereby reducing the likelihood of discovering how the runtime library has been altered to be able to interface with the protected AI model. Methods for software diversification and obfuscation are known and outside of the scope of this disclosure. These techniques are described in, for example, Collberg, Christian & Thomborson, Clark & Low, Douglas. (1997). A Taxonomy of Obfuscating Transformations. http://www.cs.auckland.ac.nz/staff-cgi-bjn/mod/csTRcgi.pl?serial. Accessed on October 1, 2024, which is incorporated herein in its entirety by reference.

Thus, if an attacker has access to a protected Al model 603 that altered Al model 603 cannot be used without the corresponding protecting Al runtime 803. However, as the Al runtime is diversified and obfuscated, access to the matching protecting Al runtime implementing "f⁻¹" is thwarted.

In a first embodiment, the Al model 601 is transformed. into the protected Al model 603 by altering the Al model, focusing on the descriptor table. An Al model descriptor table provides essential parameters for the use of the Al model, e.g., depth of the underlying neural network in terms of number on node layers between input and output, the number of nodes per layer. Thus, in this embodiment, for example, the number of layers or the size of layers parameter maybe altered.

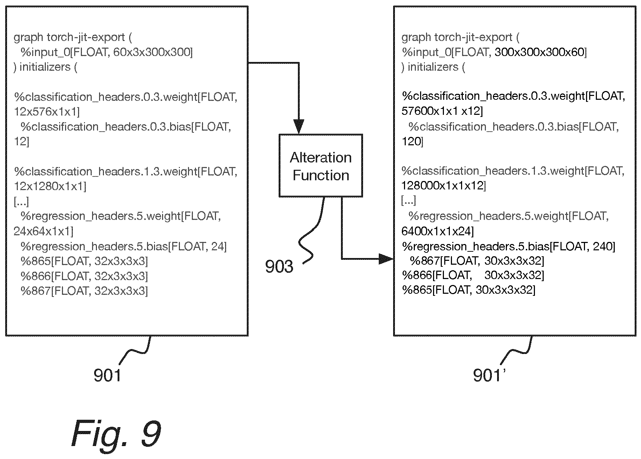

As a simple example of "f" protection, Fig. 9 provides an descriptor table 901 of an unprotected model and an altered descriptor-table 901' created by a descriptor-table alteration subfunction 903 of the protection function "f" 605 into a protecting descriptor-table 901'. The descriptor-table alteration subfunction may consist of one or several rules that scramble the descriptor table, e.g.:
- Find "torch-jit-export": move first multiplier to back of argument and add "00" to the new first multiplier
- Find "headers*weight": move first multiplier to back of argument and add "00" to the new first multiplier
- Find "headers*bias": add "0" to the argument
- Swap arrays index %865 and %867
- The set of all "f" protection functions can also alter other elements of the Al model, like the weights or the operators.

In this example, the reverse function (*f*⁻¹), which is incorporated into the protecting Al runtime 803, unscrambles the descriptor table information prior to accessing the protected AI model 603.

In a second embodiment, the protection function "*f*" 605 inserts incorrect values at various locations in the AI model 601 to produce the protected AI model 603. For example, DNN weights and bias values associated with DNN nodes are substituted with fake values. Such fake values may dramatically alter the results produced by the protected AI model 603 if accessed via an unprotected AI runtime 513 thus rendering the protected AI model 603 unusable without the corresponding protecting runtime library 803.

The corresponding inverse function (*f*⁻¹), which for this second embodiment is incorporated into the protecting AI runtime 803, applies an inverse operation to the incorrect values inserted into the protected AI model 603.

In a first alternative of this second embodiment, the protection function "*f*" 605 applies a controlled alteration to the value of some data words of the unprotected intelligence model. For example, every *n*th data word could be replaced with a value that is a reversable function of the original value. In the inverse function, original value is restored using the reverse of the reversable function. Example reversable functions include masking operations.

In a second alternative of this second embodiment, the protection function "*f*" 605 applies a reversable controlled permutation to the value of some data words of the unprotected intelligence model. For example, every *n*th data word could be replaced with a value that is a reversable permutation of the original value. In the inverse function, original value is restored using the reverse of the reversable permutation. Example reversable functions include shift operations and operations that map bits of the original data word to specific bits in the target data word.

In a third alternative of this second embodiment, the artificial intelligence model includes arrays of data. In this third alternative, the protection function "*f*" 605 creates bigger arrays surrounding at least a subset of these arrays of data. The surrounding data consists of random values. In the inverse function, original arrays of data are restored by removing the surrounding data by copying the original arrays contents from their relative location inside the bigger arrays of the protected artificial intelligence model and ignores the bigger arrays.

Thus, in this second embodiment, the structure of the AI model is not altered as alteration is limited to various locations in the AI model.

In a third embodiment, the protection function "*f*" 605 applies a global transformation function to the unprotected AI model 601 to create the protected AI model 603. This global transformation function may be a logic operation - for example, an XOR operation between data that make up the unprotected AI model 601 and a key or a shift operation performed on data words of the unprotected AI model. The transformation function may be performed on a portion of the unprotected AI model 601 or the entire unprotected AI model 601.

The corresponding function (*f*⁻¹), which for this second embodiment is incorporated into the protecting AI runtime 803, applies an inverse operation to the thus altered data that make up the unprotected AI model 601.

In a fourth embodiment, the AI model data is contextually altered, by modifying a well-known operation X in the AI runtime, implying that the input processed by this modified operator must be modified accordingly. For instance, the modified addition could add a "+ alpha" bias, and thus all input processed by this modified addition operator should be altered with "- alpha".

In a fifth embodiment, the unprotected AI model 601 is hidden within a bigger incorrect AI model to create the protected AI model 603. Consider again FIG. 2. As illustrated there, the DNN 201 includes an input layer 203, an output layer 209, and a number of hidden layers 205. The unprotected AI model 601 could be considered the hidden layers 205 with layer 207a being the input layer and the layer 207i being the output layer. The protection function "f" 605 then modifies the AI model 601 such that the weight matrix A11 to Aio would be hidden inside a much larger matrix B11 to Bxy where x and y >= io, not necessarily in a contiguous way, but mixed in a manner to reconstruct it. Thus, if the AI runtime 513 were to access the AI model represented by DNN 201, incorrect results would be produced.

The protecting AI runtime 803 applies an inverse transformation in the form of being aware of which layer in the protected AI model 603 is the correct input layer and which layer is the correct output layer.

While in the illustrative example based on FIG. 2 adds only fake input and output layers, implementations of the fifth embodiment may add an arbitrary number of fake layers both before the input layer and output layer of the unprotected AI model 601 to create the protected AI model 603. Indeed, in alternative embodiments, fake layers maybe included in the hidden layers 205 as long as the inverse function implemented in the protecting AI runtime 803 removes those layers and reroutes the links between neurons in the correct layers to reflect the structure of the unprotected AI model 601.

Turning now to a sixth and seventh embodiment, an AI model developed using machine learning is in a sense a graph of various nodes that execute sequences of operations that include an operator and some arguments. A simplified section of such a sequence, based on ONNX operations, is illustrated in the following table:

**Table I. Section of an AI model operations graph.**

| |
|---|
| 01077 = Conv[dilations = [1, 1], group = 1, kernel_shape = [1, 1], pads = [0, 0, 0, 0], strides = [1, 1]](%1068, 01078, 01079) %804 = Clip[max = 6, min = 0] (01077) |
| 01080 = Conv[dilations = [1, 1], group = 64, kernel shape = [3, 3], pads = [1, 1, 1, 1], strides = [2, 2]] (%804, 01081, %1082) |
| %807 = Clip[max = 6, min = 0] (01080) |
| 01083 = Conv[dilations = [1, 1], group = 1, kernel shape = [1, 1], pads = [0, 0, 0, 0], strides = [1, 1]](%807, %1084, 01085) 0810 = Conv[dilations = [1, 1], group = 1, kernel shape = [1, 1], pads = [0, 0, 0, 0], strides = [1, 1]] (01083, %classification_headers.5.weight, %classification_headers.5.bias) |
| %811 = Transpose[perm = [0, 2, 3, 1]](0810) |

In the graph, an operation, which may be expressed as plaintext instruction, consists of an operator followed by an argument list. Example operators are "Conv", "Clip", and "Transpose". An example of a more extensive list of operators may be found in ONNX Operators, ONNX 1.18.0 documentation, (https://onnx.ai/onnx/operators/, accessed on 15 October 2024*,* which is incorporated herein by reference). In the example of Table I, which is based on ONNX, arguments follow the operators surrounded by the highest-level brackets, e.g., in the first operation, *dilations, group, kernel_shape, pads,* and *strides* are the arguments of the Conv operator.

The AI model, e.g., including nodes with operations, is interpreted by an AI operations interpreter. A sixth embodiment involves modification of the operations and operators and corresponding modification to the AI operations interpreter.

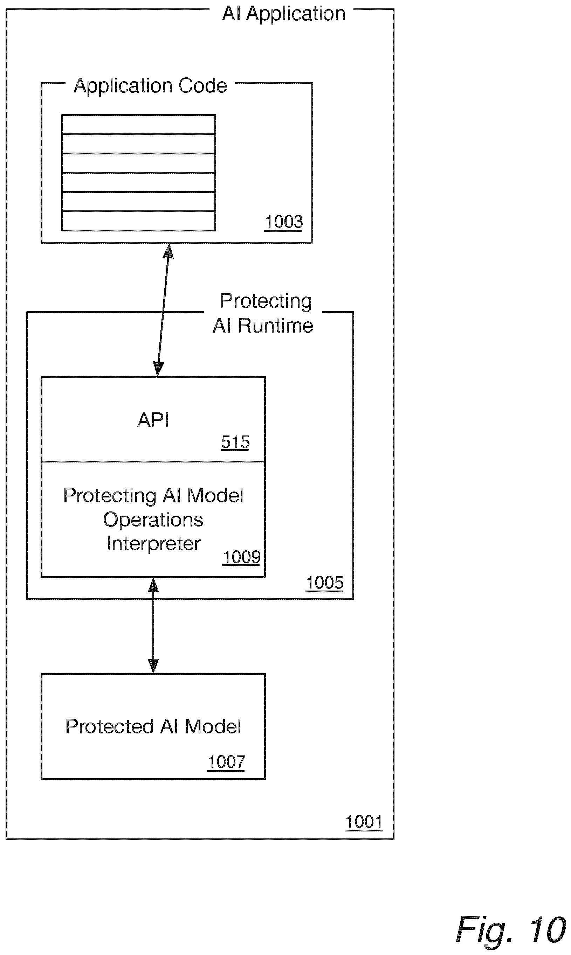

Fig. 10 is a block diagram of an AI application 1001 according to a sixth embodiment. The AI application bundles AI application code 1003, a protecting AI runtime 1005, and a protected AI model 1007, and a protecting AI operations interpreter 1009 used to interpret the protected operations of a protected AI model 1007.

As discussed above, an application developer creates the AI application code 1003. The application developer uses that code 1005 to interact with an AI model 1007. The AI model 1007 may, for example, be used to draw inferences based on input data provided to the AI application 1001. To interface with the AI model 1007, the application code 1005 makes calls on functions stored in a protecting AI runtime 1009 via the API 515. In response to such calls, the AI runtime uses a protecting AI model operations interpreter 1009.

The sixth embodiment involves simple modification of the AI operations interpreter, which allows potential techniques and alterations on either the operator names, the arguments, or the implementation of the operator itself. In this embodiment, the protection function "f" 605, which protects the AI model, alters the operations graph. The original graph is altered by replacing all operator names by fake names, adding fake operators which are ignored by a modified interpreter, swapping the arguments which are passed to each operation, and also adding fake arguments which are also ignored by the modified interpreter. Paired with this protection, the "f⁻¹" modified AI runtime library is paired with a modified interpreter, which calls the good operators when encountering the replacement names, which ignores fake operators, unswaps arguments, and ignores fake arguments. Thus, for example, considering the example code section of Table I, it may be modified into:

**Table II. Section of an AI model operations graph from Table I with altered operators and arguments.**

| |
|---|
| 01077 = 4OHQ5B [uu9e= [1, 1], 4t2k= 1, f24p= [1, 1], jt88= [0, 0, 0, 0], 1515= [1, 1]](%1068, 01078, 01079) |
| 0804 = Y7C3IG[jc2p = 26, uwzm= 30] (01077) |
| 01080 = 4OHQ5B [uu9e= [1, 1], 4t2k= 64, f24p= [3, 3], jt88= [1, 1, 1, 1], 1515= [2, 2]](%804, 01081, 01082) |
| 0807 = Y7C3IG[jc2p = 26, uwzm= 30] (01080) |
| 01083 = 4OHQ5B [uu9e= [1, 1], 4t2k= 1, f24p= [1, 1], jt88= [0, 0, 0, 0], 1515= [1, 1]](%807, 01084, 01085) |
| 0810 = 4OHQ5B [uu9e= [1, 1], 4t2k= 1, f24p= [1, 1], jt88= [0, 0, 0, 0], 1515= [1, 1]] (%1083, %classification_headers.5.weight, %classification_headers.5.bias) |
| 0811 = ZJHBVE [mcji= [0, 2, 3, 1]] (0810) |

Additionally, the operations graph sequences may be altered to include dummy operations. Table III illustrates an example in which a dummy operation (in italics for illustrative purposes) has been inserted after the second operation in the sequence of Table II.

**Table III. Section of an AI model operations graph from Table I with inserted dummy operation.**

| |
|---|
| 01077 = 4OHQ5B [uu9e= [1, 1], 4t2k= 1, f24p= [1, 1], jt88= [0, 0, 0, 0], 1515= [1, 1]](%1068, 01078, %1079) |
| %804 = Y7C3IG[jc2p = 26, uwzm= 30] (01077) |
| %8088 = 7CI51K [6mit= 78, blkn= 12] (%8086) |
| 01080 = 4OHQ5B [uu9e= [1, 1], 4t2k= 64, f24p= [3, 3], jt88= [1, 1, 1, 1], 1515= [2, 2]](%804, 01081, %1082) |
| 0807 = Y7C3IG[jc2p = 26, uwzm= 30] (01080) |
| 01083 = 4OHQ5B [uu9e= [1, 1], 4t2k= 1, f24p= [1, 1], jt88= [0, 0, 0, 0], 1515= [1, 1]](%807, 01084, %1085) |
| 1810 = 4OHQ5B [uu9e= [1, 1], 4t2k= 1, f24p= [1, 1], jt88= [0, 0, 0, 0], 1515= [1, 1]](01083, %classification headers.5.weight, %classification_headers.5.bias) |
| %811 = ZJHBVE [mcji= [0, 2, 3, 1]](0810) |

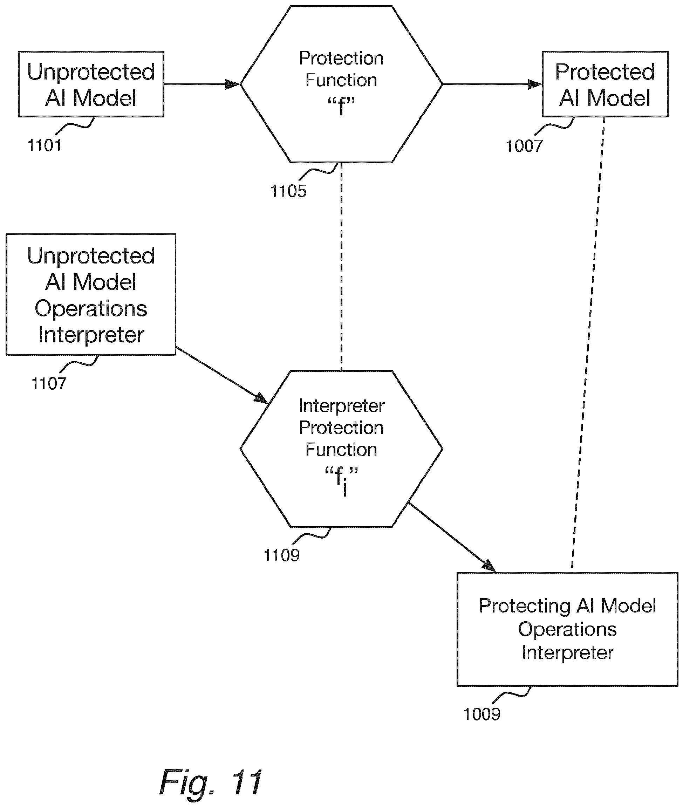

Thus, for the sixth embodiment, the protection function "f" 1105 (corresponding to protection function "f" 605 of Fig. 6) alters operators and arguments, and, may insert dummy operations, and a corresponding alteration is performed to the AI model operations interpreter 517 to produce the protecting AI model operations interpreter 1009. FIG. 11 illustrates this flow.

FIG. 11 is a data flow diagram illustrating the transformation of an unprotected AI model 1101 (corresponding to unprotected AI model 601 of FIG. 6) into the protected AI model 1007 (corresponding to protected AI model 603) and the corresponding transformation of an unprotected AI model operations interpreter 1107 (corresponding to the AI model operations interpreter 517 of FIG. 5) into the protected AI model interpreter by an interpreter protection function "fᵢ" 1109.

In the sixth embodiment, as the protection function "f" 1105 alters operators and arguments, and may insert dummy operations, the alterations to the AI model operations interpreter correspond to the alterations to the AI model. For example, if the CONV operation is changed to 4OHQ5B as shown in Tables I and II, the interpreter is altered by the interpreter protection function "fᵢ" to recognize 4OHQ5B as being the CONV operation.

Similarly, if 7CI51K indicates a dummy operation, the interpreter is modified to recognize it as such and to ignore the operation.

A seventh embodiment provides for unpredictable modification of the AI operations interpreter, by adding non-standard operators recognizable by the interpreter. As all operator names can now be renamed to meaningless names, adding new unattended operations provides an advantage against the attacker in term of functionalities. For instance, a "decrypt weight" operator could be inserted in the graph, and an attacker would not be able to deduce that the expected input weights are encrypted. Alternatively, a combination of operations that often are executed sequentially could be replaced by a new "aggregated" operator performing the sequence of operations. In this case embodiment, the "f" protection consists in modifying the graph and the AI model weights in order to adapt to these new operators. Conversely, the "f⁻¹" modified interpreter of the modified AI runtime weights passed as argument when this "decrypt" operator is encountered in the graph, or to execute the sequence of operations when the "aggregated" operator is processed.

In one implementation, based on ONNX, the AI model is saved in an ONNX format, which transforms the neural network into a sequence of operations and numerous data arrays. An interpreter based on an ONNX engine allows for the execution of these different operations. This seventh embodiment entails protection by changing the operators describing the network. For example, where there was a matrix multiplication, an addition is used instead. Additionally, data interpreted as floating-point numbers may be interpreted as integers, and the order of function arguments such as A, B, C, D, might be changed to A,C,B,D, for instance. These transformations are reversed before interpretation of the AI model.

The AI model is interpreted by an interpretation engine which supports a certain number of operators. This seventh embodiment uses the ability to create custom operators, for example, by combining two operators into one, or creating encryption operators, among others. Since these operators are not standard, even if the AI model is stolen, an attacker cannot discern from the AI model what these operators do as they are non-standard to the ONNX format. Thus, the introduction of non-standard operators protects the AI model from unauthorized use.

Although specific embodiments of the invention have been described and illustrated, the invention is not to be limited to the specific forms or arrangements of parts so described and illustrated. The invention is limited only by the claims.

## Claims

1. A method for operating an artificial intelligence program development system to protect an artificial intelligence model installed in an artificial intelligence system developed using the artificial intelligence program development system from being pirated, the method comprising:
- receiving by the artificial intelligence development system an unprotected artificial intelligence model;
- transforming the unprotected artificial intelligence model into a protected artificial intelligence model using a transformation function (f) after the training phase of the artificial intelligence model; and
- operating a protecting AI runtime accessible via an application programming interface to access the protected artificial intelligence model by executing an inverse transformation function (f⁻¹) incorporated into access routines of the protecting AI runtime.

2. Method according to claim 1, wherein the transformation function alters the descriptor table of the artificial intelligence model into an altered descriptor table.

3. Method according to claim 2, where the inverse transformation function translates the altered descriptor table back into an unaltered descriptor table.

4. Method according to any of claims 1 to 3, wherein the transformation function inserts incorrect values at defined locations in the artificial intelligence model.

5. Method according to claim 4, wherein the inverse transformation function replaces the inserted incorrect values in the protected artificial intelligence model with corresponding correct values.

6. Method according to any of claims 1 to 5, wherein the transformation function alters the artificial intelligence model by applying a controlled alteration to the value of a first plurality of data words of the artificial intelligence model.

7. Method according to claim 6, wherein the inverse transformation function is applied to the first plurality of data words of the protected artificial intelligence model.

8. Method according to any of claims 1 to 7, wherein the transformation function alters the artificial intelligence model by applying a reversable controlled permutation of a first plurality of data words of the artificial intelligence model.

9. Method according to claim 8, wherein the inverse transformation function is applied to the first plurality of data words of the protected artificial intelligence model to cancel the controlled permutation of the first plurality of data words by applying the reverse of the controlled permutation.

10. Method according to any of claims 1 to 10, wherein the transformation function alters the artificial intelligence model by creating bigger arrays containing random data around the original array contents, inserted at some relative location in the bigger arrays.

11. Method according to claim 10, wherein the inverse transformation function copies the original arrays contents from their relative location inside the bigger arrays of the protected artificial intelligence model and ignores the bigger arrays.

12. Method according to any of claims 1 to 11, wherein the transformation function alters the operations graph of the artificial intelligence model by adding an extra operation.

13. Method according to claim 12, wherein the inverse transformation function removes the extra operation when the operations graph of the protected artificial intelligence model is processed.

14. Method according to any of claims 1 to 13, wherein the artificial intelligence model is implemented as interpretable logic including a set of opcodes and corresponding arguments, wherein the transformation function obfuscates the opcodes and corresponding arguments of the interpretable logic implementation of the artificial intelligence model by replacing the original opcodes and corresponding arguments with replacement opcodes and replacement arguments; the method further comprising:
- interpreting the obfuscated opcodes and obfuscated arguments by executing the original opcodes and corresponding arguments when the replacement opcodes and replacement arguments are encountered during the interpretation of the protected AI model.

15. Method according to any of claims 1 to 14, wherein the artificial intelligence model is implemented as interpretable logic including a set of opcodes and corresponding arguments, wherein the transformation function obfuscates the arguments of the interpretable logic implementation of the artificial intelligence model by swapping a plurality of opcode's argument order from an original ordering, and replacing the original opcodes's arguments with the swapped ordering; the method further comprising:
- during processing of the protected AI model, when encountering an opcode with a swapped argument ordering, reversing the swapping of argument back to the original order and executing the encountered opcode with the original argument order.

16. Method according to any of claims 1 to 15, further providing for non-standard functions represented by non-standard opcodes, and allowing to insert or replace some original opcodes or combinations of original opcodes by the non-standard opcodes in the protected AI model, wherein the artificial intelligence model is implemented as interpretable logic including a set of opcodes and corresponding arguments, wherein the transformation function creates the protected AI model by inserting or replacing a plurality of original opcodes or combinations of original opcodes with the non-standard opcodes.

17. Method according to claim 16, further comprising:
- modifying an interpreter for said interpretable logic to interpret said nonstandard opcodes;
- embedding the modified interpreter in the protected AI runtime;
- wherein the modified interpreter, in response to encountering said non-standard opcodes when interpreting an AI model, executing functionality to produce results equivalent to said original opcodes.

18. An artificial intelligence development system executing according to any of the preceding claims.

19. An artificial intelligence system programmed with any transformation according to any of claims 1 to 17.
